# EUROPÄISCHE PATENTANMELDUNG

(11) **EP 4 516 629 A1**
(43) Veröffentlichungstag der Anmeldung: **05.03.2025**
(21) Anmeldenummer: 24198395.6
(22) Anmeldetag: 04.09.2024
(51) Int. Cl.: B62B 3/02, B62B 3/10

(54) **KLAPPBARER EINHÄNGESACKWAGEN**

(30) Priorität: 04.09.2023 CH 9482023
(71) Anmelder: DALA GmbH, 3216 Ried b. Kerzers (CH)
(72) Erfinder: Laubscher, Daniel, 3216 Ried b. Kerzers (CH)
(74) Vertreter: BOVARD AG

(57) **Zusammenfassung**

Die Erfindung betrifft einen Einhängesackwagen (1), umfassend ein Gestell (10), welches in eine Transportstellung und eine Gebrauchsstellung bringbar ist. Das Gestell (10) umfasst eine Bodenplatte (12), an welcher zwei Hinterräder (14a, 14a') und mindestens ein Vorderrad (14b) angeordnet sind, die in Kontakt mit und fahrbar über einen Untergrund sind, mindestens zwei parallele vertikale Stützen (15, 15'), welche jeweils mit einem unteren Ende (16a, 16a') via eines Scharniers (24, 24') an der und gegen die Bodenplatte (12) schwenkbar angeordnet und in vertikaler Stellung mittels einer Verriegelung (27, 27') arretierbar sind, und einen Rahmen (18), welcher mit oberen Enden (16b, 16b') der vertikalen Stützen (15, 15') via Gelenken (17, 17') gelenkig verbunden ist, wobei der Rahmen (18) relativ zu der vertikalen Stütze (15) in die Gebrauchsstellung schwenkbar ist, in welcher sich der Rahmen (18) parallel zur Bodenplatte (12) erstreckt. Ferner umfasst der Einhängesackwagen (1) einen Sack (2) mit einem oberen Rand (30), an welchem über den Umfang verteilt Befestigungsmittel (31) vorgesehen sind, die an dem Gestell (10) lösbar befestigbar sind.

## Beschreibung

### Technisches Gebiet der Erfindung

Die vorliegende Erfindung bezieht sich auf einen klappbaren bzw. faltbaren Einhängesackwagen, insbesondere auf einen Wagen mit geländegängigen Rädern, in welchen ein Sack eingehängt werden kann, um Sammelgut, beispielsweise Grünabfälle, aufzunehmen und zu transportieren.

### Stand der Technik

Klappbare oder faltbare Wagen mit einem daran fest angeordneten Sammelbehälter sind für den Transport von Gegenständen hin zu einer Entsorgungsstelle bekannt. Diese nehmen bei Nichtgebrauch in der zusammengeklappten Stellung nur wenig Platz ein und erleichtern in der ausgeklappten Stellung das Sammeln und Entsorgen. Je nach Einsatzort und Funktion können diese Wägen auch grosse Räder umfassen, um leicht über Unebenheiten zu rollen. Derartige Wagen sind als Einkaufswagen, Strandwagen, Müllwagen oder dergleichen bekannt.

Ferner sind zusammenklappbare Wagen bekannt, in welche ein Sack oder Behälter einhängbar ist, der lösbar an entsprechenden Stangen oder an einem Gestell befestigbar ist. Bekannt sind demnach leichte mobile Wagen, die konzipiert sind, um Einkaufstaschen oder Textilsäcke zum Sammeln von Wäsche oder dergleichen vorübergehend in einer geöffneten Position aufzunehmen, um so das Einsammeln und Transportieren von Gegenständen zu erleichtern.

Aus US 6354619 B1 ist ein faltbarer Wagen bekannt, in welchen ein Sack einhängbar ist, wobei der Wagen ein scherenartig zusammenfaltbares Gestänge umfasst, welches zur Stabilisierung gelenkig miteinander verbundene Stützelemente aufweist.

Aus FR 2708898 A1 ist ein fahrbarer Trolley bekannt, umfassend ein zusammenklappbares Rollgestell mit mehreren Rädern zur Aufnahme eines starren Behälters und mit einem Haltegriff. Der Behälter ist an einer verstell- und verschwenkbaren mobilen Stütze aufnehmbar, so dass der Behälter auch höhenverstellbar ist. Das Rollgestell umfasst einen unteren Rahmen und einen hinteren Rahmen, die nach Entriegelung gegeneinander in eine zusammengeklappte Position verschwenkbar sind.

Es gibt allerdings weiterhin Bedarf an einem zusammenklappbaren Einhängesackwagen, in dem ein grossvolumiger Behälter bzw. Sack eingehängt werden kann und welcher in einer Gebrauchsstellung auch über schwieriges Gelände problemlos und einfach lenkbar ist.

### Zusammenfassung der Erfindung

Aufgabe der vorliegenden Erfindung ist es daher, einen klappbaren Einhängesackwagen vorzusehen, welcher robust genug ist, auch schwere Lasten über ein unwegsames Gelände zu transportieren.

Gelöst wird die Aufgabe durch einen Einhängesackwagen gemäss Anspruch 1. Vorteilhafte Ausgestaltungen und Weiterbildungen der Erfindung ergeben sich aus den abhängigen Ansprüchen.

Der klappbare Einhängesackwagen sieht eine einfache lösbare Befestigung des Sacks vor, in welchen insbesondere Grünabfälle, Laub und/oder andere aufzusammelnden Gegenstände aufnehmbar sind. Der Einhängesackwagen kann darüber hinaus noch weitere für das Aufsammeln geeignete Gegenstände wie Besen, Rechen, Schaufeln, Gabeln etc. einfach aufnehmen.

Wesentlich für die erfindungsgemässe Lösung ist ein Einhängesackwagen, umfassend
- ein Gestell, welches in eine Transportstellung und eine Gebrauchsstellung bringbar ist, umfassend
   - eine Bodenplatte, an welcher zwei Hinterräder und mindestens ein Vorderrad angeordnet sind, die in Kontakt mit und fahrbar über einen Untergrund sind,
   - mindestens zwei parallele vertikale Stützen, welche jeweils mit einem unteren Ende via eines Scharniers an der und gegen die Bodenplatte schwenkbar angeordnet und in vertikaler Stellung mittels einer Verriegelung arretierbar sind, und
   - einen Rahmen, welcher mit oberen Enden der vertikalen Stützen via Gelenken gelenkig verbunden ist, wobei der Rahmen relativ zu der Stütze in die Gebrauchsstellung schwenkbar ist, in welcher sich der Rahmen parallel zur Bodenplatte erstreckt;
- einen Sack mit einem oberen Rand, an welchem über den Umfang verteilt Befestigungsmittel vorgesehen sind, die an dem Gestell lösbar befestigbar sind.

Der Einhängesackwagen ist derart ausgebildet, dass er ein robustes Gestell aufweist, welches aus einer Bodenplatte, mindestens zwei vertikalen Stützen und einem Rahmen zusammengesetzt ist. Die einzelnen Elemente sind gelenkig miteinander verbunden, so dass das Gestell die zusammengeklappte Transportstellung einnehmen kann, welche sich durch eine geringe Höhe auszeichnet, aber weiterhin fahrbar ist.

Gleichzeitig kann das Gestell aus gewichtsreduzierten Komponenten aufgebaut sein. Beispielsweise kann der Rahmen aus Vierkantprofilen oder Rohren aufgebaut sein und/oder die Bodenplatte mit geringer Materialstärke an einem aus Vierkantprofilen aufgebauten Stützgestell aufgenommen werden und/oder die vertikalen Stützen, etc. aus U-förmig gebogenen Blechen gebildet sein. So kann das Gewicht des Einhängesackwagens beispielsweise im Bereich von 30 bis 40 kg sein. Eine Ausführungsform hat beispielsweise ein Gewicht von 34 kg. Diese Angaben dienen ledlich der Illustration und sind nicht limitierend.

In der Gebrauchsstellung nimmt der Einhängesackwagen eine Höhe ein, welche sowohl das Schieben als auch das Sammeln von Gegenständen in einer angenehmen Haltung für einen Benutzer ermöglicht.

Eine durchgängige Bodenplatte ist vorgesehen, um das Gestell zu stabilisieren und darüber hinaus um als Auflagefläche für den an dem Einhängesackwagen eingehängten Sack zu fungieren. Dies schliesst mit ein, dass die Bodenplatte ein Gitter ist, welches eine durchgängige Fläche bildet. Mit zunehmendem Füllen des Einhängesacks, d.h. mit zunehmendem Gewicht, ist eine durch die Bodenplatte bereitgestellte Abstützung vorteilhaft. Eine derartige Bodenplatte verhindert ferner, dass der Sack in Kontakt mit dem Untergrund kommt und so der Einhängesackwagen nur schwer bewegt werden kann.

Die Bodenplatte ist ebenso wie der Sack vorzugsweise rechteckig. Andere Formen, beispielsweise trapezförmig, sind denkbar.

Vorteilhaft für die Beweglichkeit des Einhängesackwagens ist die geeignete Wahl der Anzahl und des Typs der Räder. In einer Ausführungsform unterscheiden sich die Hinterräder und das mindestens eine Vorderrad voneinander. Die Hinterräder sollen vor allem das gute Abrollen auch auf unebenem Untergrund erlauben, das Überwinden von Stufen erleichtern. Demnach sind die Hinterräder vorzugsweise als gegenüber dem Vorderrad grössere, nicht lenkbare Räder ausgebildet. Hier bieten insbesondere schlauchlose Räder oder Reifen Vorteile.

Um den Einhängesackwagen gut und sicher lenken und ihn aber auch gegen unbeabsichtigtes Rollen sichern zu können, ist vorzugsweise mindestens ein lenkbares und arretierbares Vorderrad vorgesehen, bevorzugt zwei entsprechende Vorderräder. Demnach ist das mindestens eine Vorderrad um eine vertikale Achse schwenkbar, um eine einfache Bewegung des Einhängesackwagens in alle Richtungen zu ermöglichen. Das auch als Lenkrolle bezeichenbare Vorderrad kann in unterschiedlicher Ausführungsform eingesetzt werden, je nach Tragfähigkeit und/oder Durchmesser. Die Anordnung von lenkbaren und nicht lenkbaren Räder kann auch vertauscht sein.

Alternativ kann das mindestens eine Vorderrad nur lenkbar sein, wobei mindestens eine Bremse vorgesehen sein kann, beispielsweise eine Scheiben- oder Trommelbremse, welche mittels Handgriffen, Drehhebeln oder elektronisch betätigbar ist, um den Einhängesackwagen festzustellen.

In einer bevorzugten Ausführungsform haben die Hinterräder beispielsweise einen Durchmesser im Bereich von 20 bis 30 cm und eine Breite im Bereich von 5 bis 9 cm, insbesondere haben die Hinterräder einen Durchmesser von 25 cm und eine Breite von 7 cm, und/oder die Vorderräder beispielsweise einen Durchmesser im Bereich von 8 bis 12 cm und eine Breite im Bereich von 1,5 bis 2,5 cm, insbesondere haben die Vorderräder einen Durchmesser von 10 cm und eine Breite von 2 cm. Diese Angaben sind lediglich illustrativ und nicht limitierend. In einer weiteren bevorzugten Ausführungsform sind beide Hinterräder starr und schlauchlos ausgebildet, während die beiden Vorderräder beweglich und jeweils mit einer Feststellbremse versehen sind, um unbeabsichtigtes Wegrollen des erfindungsgemässen Einhängesackwagens zu verhindern.

Ferner umfasst das Gestell vertikale Stützen, welche an der Bodenplatte parallel zueinander angeordnet und mit dieser via Scharnieren gelenkig verbunden sind, so dass die Stützen gegen die Bodenplatte schwenkbar sind. Insbesondere sind die vertikalen Stützen an einer Hinterseite des Gestells vorgesehen. Hierfür können an der Bodenplatte stangenförmige horizontale Verlängerungen vorgesehen sein, an welchen einerseits die Hinterräder und andererseits die vertikalen Stützen gelenkig anordenbar sind. Dies hat den Vorteil, dass ein Benutzer mehr Freiraum für das Gehen mit dem Einhängesackwagen hat.

Zur Sicherung der vertikalen Stellung der Stützen, in welcher diese mit ihrem unteren Ende auf der Bodenplatte bzw. horizontalen Verlängerung derselben aufliegen, kann jeweils ein Verriegelungselement vorgesehen sein, welches in Eingriff mit dem unteren Ende der Stütze, beispielsweise einer daran vorgesehenen Verlängerung, bringbar ist. Darüber hinaus kann am unteren Ende der jeweiligen vertikalen Stütze eine seitliche Anlagefläche vorgesehen sein, welche mit einer Seitenfläche der Bodenplatte, bzw. der horizontalen Verlängerung, in der vertikalen Stellung in Anlage kommt. Demnach ist die aufrechte Stellung der vertikalen Stütze gegen Verkippen in zwei zueinander orthogonal stehenden Richtungen gesichert.

Zur Einnahme der Transportstellung sind die vertikalen Stützen gegen die Bodenplatte verschwenkt und liegen in dieser Stellung flach auf der Bodenplatte auf.

Die vertikalen Stützen können zur Steigerung der Stabilität eine trapezförmige Form aufweisen mit einer breiteren Grundfläche, bzw. unterem Ende, und einer schmaleren Grundfläche an dem oberen Ende. Ferner kann diese trapezförmige Form aus einem entsprechend gebogenen Profil aufgebaut sein, um so das Gewicht des Einhängesackwagens zu reduzieren.

An jedem oberen Ende der vertikalen Stützen ist der Rahmen um entsprechende Gelenkmittel gelenkig angeordnet. Demnach ist der Rahmen relativ zu den parallelen vertikalen Stützen in die Gebrauchsstellung verschwenkbar, wobei der Rahmen weitgehend parallel zur Bodenplatte ausgerichtet ist. Ausgehend von der Transportstellung, wird hierbei der Rahmen um etwa 270° relativ zu den vertikalen Stützen verschwenkt. Die Aussenform des Rahmens ist beispielsweise u-förmig oder als geschlossener Rahmen ausgebildet und kann sich aus Rechteckprofilen zusammensetzen. Demnach umfasst der Rahmen zueinander parallel erstreckende Längsstangen und mindestens eine die Längsstangen verbindende Querstange. Die mindestens eine Querstange stabilisiert den Rahmen und stellt darüber hinaus einen weiteren Handgriff zum Schieben und/oder Ziehen des Einhängesackwagens bereit.

In der zusammengeklappten Stellung erstreckt sich der Rahmen parallel zur Bodenplatte und ist auf dieser bzw. den eingeklappten vertikalen Stützen aufliegend. Beim Aufrichten des Gestells, d.h. beim Stellen in die Gebrauchsstellung, wird der Rahmen um die oberen Enden der aufgerichteten vertikalen Stützen verschwenkt, bis er sich mit Abstand oberhalb der Bodenplatte und parallel zu dieser erstreckt. In der Gebrauchsstellung kann der Rahmen auf einer oberen Endfläche der vertikalen Stütze aufliegen, welche eine Abstützung bereitstellt.

Der Einhängesackwagen kann in einer Ausführungsform an der Hinterseite einen Handgriff umfassen, welcher vorzugsweise als Horizontalstrebe zwischen den parallelen vertikalen Stützen verläuft. Dieser Handgriff kann auf einer für einen Benutzer angenehmen Höhe verlaufen und ergonomisch geformt sein und/oder vorstehend verlaufen, um für einen Benutzer das Schieben und/oder Ziehen des Einhängesackwagens zu vereinfachen. Der Handgriff kann auch U-förmig ausgebildet und an seinen Enden an den vertikalen Stützen befestigt sein, vorzugsweise in einer für einen Benutzer angenehmen Höhe. Der Handgriff könnte auch höhenverstellbar angebracht sein, so dass seine Höhe an den Benutzer angepasst werden kann. Auch könnte der Handgriff ebenfalls klappbar ausgestaltet und in der Gebrauchsstellung arretierbar sein.

In einer bevorzugten Ausführungsform ist das Gestell aus einem rostfreien Stahl, vorzugsweise aus Chromstahl, gefertigt, um so einen robusten und gegenüber der Witterung beständigen Einhängesackwagen vorzusehen. Ferner ist das Gewicht des Einhängesackwagens auf eine einfache Handhabung und/oder ein einfaches Verschieben angepasst, wobei das Gestell aus entsprechenden hohlen Vierkantstreben und/oder Rechtkant- und/oder U-Profilen aufgebaut sein kann, welche miteinander verschweisst werden können.

Das Gestell kann in der Gebrauchsstellung eine Dimension aufweisen, so dass seine Höhe, Breite und Länge für einen Benutzer zum Sammeln, Verschieben und Manövrieren angenehm ist. In der Transportstellung, d.h. in der zusammengeklappten Stellung, ist das Gestell in eine flache Form bringbar, welche mittels der Räder weiterhin verfahrbar ist. Beispielsweise weist das Gestell in einer Ausführungsform in der Gebrauchsstellung eine Höhe im Bereich von 95 bis 115 cm, insbesondere eine Höhe von 104 cm, eine Länge im Bereich von 100 bis 130 cm, insbesondere eine Länge von 115 cm, und/oder eine Breite im Bereich von 60 bis 80 cm, insbesondere eine Breite von 68 cm, auf. In der Transportstellung weist diese Ausführungsform dann eine Höhe im Bereich von 35 bis 50 cm, insbesondere eine Höhe von 42,5 cm auf. Diese Angaben dienen lediglich der Illustration einer Ausführungsform und sind nicht limitierend.

Um den Einhängesackwagen aus der Transportstellung in die Gebrauchsstellung zu klappen, kann der Rahmen erfasst und angehoben werden, wobei sich die vertikalen Stützen aufrichten. Die unteren Enden der vertikalen Stützen kommen in der aufgerichteten Stellung zur Anlage mit den Auf- bzw. Anlageflächen der Bodenplatte und werden arretiert. Der Rahmen wird weiter verschwenkt, bis er in einer Position parallel zum Boden mit Abstand zur Bodenplatte auf entsprechenden Stütz- bzw. Auflagenflächen aufliegt.

In einer Ausführungsform sind an dem Gestell, insbesondere an daran vorgesehenen Querstangen, Aufnahmen vorgesehen, an welchen weitere Geräte fixierbar sind. Beispielsweise können Durchführungen und/oder rohrförmige Aufnahmen und/oder Klemmmittel vorgesehen sein, so dass ein Stiel eines Besens, Rechens, einer Schaufel, einer Gabel, etc. durchgeführt, aufgenommen und/oder eingeklemmt und gehalten werden kann.

Der Sack ist abnehmbar und kann von dem Einhängesackwagen getrennt werden, um unabhängig von diesem transportiert werden zu können. Zum Einhängen des Sacks sind an dem Gestell, vorzugweise an den Längsstreben des Rahmens, Haltemittel vorgesehen. So können die Haltemittel eine Hakenform haben, in welche die als Schlaufen an dem oberen Rand des Sacks über den Umfang verteilt angeordneten Befestigungsmittel aufnehmbar bzw. einhängbar sind. Der eingehängte und aufgespannte Sack stellt eine Öffnung bereit, über welche das Grünzeug, etc. in den Sack aufnehmbar ist. Die Öffnung ist vorzugsweise so gross, dass auch sperrige Gegenstände diese passieren können. Ferner kann der obere Rand des Sacks verstärkt sein, beispielsweise durch ein umfänglich angeordnetes Verstärkungsband. Vorteilhafterweise sind über dessen Umfang verteilt Befestigungsmittel wie insbesondere Schlaufen vorgesehen, die an dem Gestell lösbar befestigbar sind. So können bevorzugterweise die Schlaufen in entsprechende am Gestell befindliche Haken eingehängt werden.

In einer bevorzugten Ausführungsform weist der in dem Einhängesackwagen aufnehmbare Sack eine rechteckige Grundfläche und Öffnung auf. Die rechteckige Form des Sacks erleichtert das Sammeln von sperrigen Gegenständen im Gegensatz zu Säcken mit runder Grundfläche, bzw. runder Öffnung, und ist insbesondere für das Sammeln von Grünzeug vorteilhaft.

In einer weiteren Ausführungsform weist der Sack an gegenüberliegenden Seiten Tragegriffe auf, mittels welchen der Sack auch ausserhalb des Einhängesackwagens bequem zu transportieren ist. Alternativ könnte der Sack auch an den als Schlaufen ausgebildeten Befestigungsmitteln aufgenommen werden, beispielsweise durch Zinken eines Transportfahrzeugs. In einer anderen Ausführungsform weist der Sack auch am Boden an gegenüberliegenden Seiten Tragegriffe oder Schlaufen auf, was ein Auskippen des Sacks durch den Benutzer erleichtert.

Der Sack ist in einer Ausführungsform aus einem festen Gewebe gefertigt, vorzugsweise aus Polypropylen. Somit ist dieser leichtgewichtig und trotzdem robust genug, um Sammelgut darin aufzunehmen. Der Sack kann in verschiedenen Grössen bereitgestellt sein, wobei die Öffnung vorzugsweise stets eine gleiche Grösse hat, aber das Fassungsvolumen variiert. So werden beispielsweise kleine Säcke mit einem Fassungsvermögen im Bereich von 100 bis 300 l, insbesondere mit einem Fassungsvermögen von 220 l und/oder mit einer Grösse von 98 cm x 55 cm x 46 cm (Länge x Breite x Höhe), nicht auf der Grundplatte aufliegen, während grosse Säcke mit einem Fassungsvermögen im Bereich von 350 bis 500 l, insbesondere mit einem Fassungsvermögen von 450 l und/oder mit einer Grösse von 98 cm x 55 cm x 90 cm (Länge x Breite x Höhe), auf der Grundplatte aufliegen. Es ist auch möglich, gefüllt kleine Säcke auf der Grundfläche zu lagern, um darüber am Rahmen aufgehängte weitere kleine Säcke zu befüllen. Der Einhängesackwagen wird insbesondere mit einem Sack mit einem Fassungsvermögen im Bereich von 300 bis 500 l verwendet.

Jeder der vorstehend beschriebenen bevorzugten Variante kann mit jeder anderen bevorzugten Variante kombiniert werden und ist noch von der Erfindung umfasst. Selbstverständlich ist auch die Kombination einer beliebigen Anzahl von bevorzugten Varianten von der Erfindung mitumfasst.

Weitere Einzelheiten der Erfindung gehen aus der folgenden Beschreibung bevorzugter Ausführungsformen des erfindungsgemässen klappbaren Einhängesackwagens hervor, welche in den beiliegenden Zeichnungen beispielhaft dargestellt sind. Aus der Beschreibung lassen sich weitere Vorteile der vorliegenden Erfindung entnehmen, sowie Anregungen und Vorschläge, wie der Erfindungsgegenstand im Rahmen des Beanspruchten abgeändert oder auch weiterentwickelt werden kann.

### Kurzbeschreibung der Zeichnungen

Die Ausführungsbeispiele der Erfindung werden nachfolgend anhand der Zeichnungen näher erläutert. Es zeigen:
Figur 1 eine schematische perspektivische Darstellung eines Einhängesackwagens gemäss einer Ausführungsform;
Figur 2 eine schematische Darstellung eines Details des Enhängesackwagens gemäss Figur 1,
Figur 3 eine schematische perspektivische Darstellung des Einhängesackwagens gemäss Fig. 1 in einer geklappten Transportstellung;
Figur 4a - 4c schematische perspektivische Darstellungen des Zusammenklappens des Einhängesackwagens; und
Figur 5 eine schematisch perspektivische Darstellung eines Einhängesackwagens mit einem daran aufnehmbaren Sack.

### Bevorzugte Ausführungsformen der Erfindung

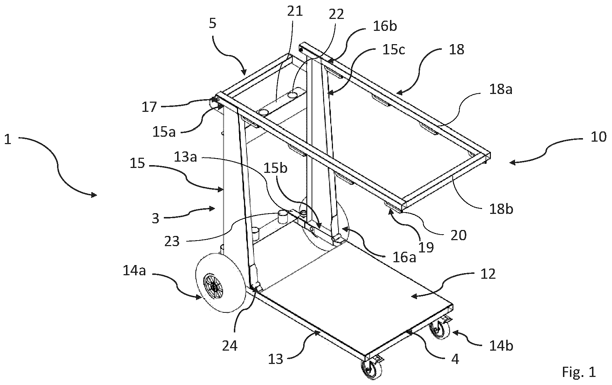

Die Figur 1 zeigt in schematischer perspektivischer Darstellung einen klappbaren Einhängesackwagen 1 in einer bevorzugten Ausführungsform. Der Einhängesackwagen 1 ist in der Darstellung ohne einen daran aufnehmbaren Sack 2 dargestellt. Mit 3 wird eine Hinterseite des Einhängesackwagens 1 und mit 4 eine entsprechende Vorderseite bezeichnet. Diese Bezeichnungen beziehen sich auf eine bevorzugte Verfahrrichtung des Einhängesackwagens 1.

Der Einhängesackwagen 1 umfasst ein Gestell 10, welches sich zusammensetzt aus einer Bodenplatte 12 mit daran angeordneten Rädern 14, d.h. Hinterrädern 14a, 14a' und Vorderrädern 14b, 14b`, an der Bodenplatte 12 gelenkig angeordnete vertikale Stützen 15, 15' und einem Rahmen 18, welcher an einem oberen Ende 16b, 16b' der vertikalen Stützen 15, 15' via Gelenken 17, 17' gelenkig angeordnet ist.

Aus der Figur 1 ist erkennbar, dass die Bodenplatte 12 eine durchgängige Fläche bereitstellt, wobei in der dargestellten Ausführungsform an der Unterseite der Bodenplatte 12 ein Stützgestell 13 mit mindestens parallelen Längsstreben vorgesehen ist, welche sich zu der Hinterseite 3 als horizontale Verlängerungen 13a erstrecken. Die durchgängige Bodenplatte 12 kann eine Stabilisierung des Gestells 10 bereitstellen und darüber hinaus eine Abstützfläche für den in dem Einhängesackwagen 1 aufnehmbaren Sack 2.

An den horizontalen Verlängerungen 13a, 13a', bzw. an der Bodenplatte 12, sind die Hinterräder 14a, 14a' drehbar angeordnet, welche aufgrund einer entsprechenden Ausführungsform ein einfaches Rollen auch über unebenen Untergrund erlauben. Dargestellt sind Hinterräder 14a, 14a', welche im Vergleich zu den Vorderrädern 14b, 14b' einen grösseren Durchmesser haben und insbesondere als schlauchlose Reifen eingesetzt werden. Insbesondere haben die Hinterräder 14a, 14a' einen zwei- bis dreimal grösseren Durchmesser als die Vorderräder 14b, 14b'. Die Vorderräder 14b, 14b' sind als Lenkrollen ausgebildet, welche ferner feststellbar sind. Mittels dieser Vorderräder 14b, 14b' ist ein gelenktes Manövrieren des Einhängesackwagens 1 möglich und dieser ist gegen Wegrollen sicherbar.

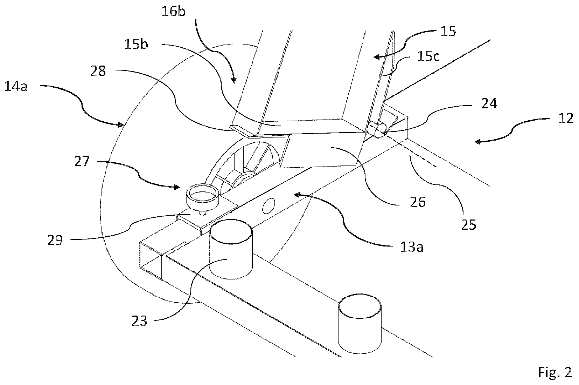

In der dargestellten Ausführungsform ist die trapezförmige vertikale Stütze 15 als Profil mit einer oberen Endfläche 15a, einer unteren Endfläche 15b und Seitenflächen 15c geformt, so dass eine ausreichende Stabilität bei geringem Gewicht erreichbar ist. Die vertikale Stütze 15, bzw. die untere Endfläche 15b, ist an den horizontalen Verlängerungen 13a mittels Scharnieren 24 schwenkbar angeordnet, so dass sie gegen die Bodenplatte 12 verschwenkbar sind. In der dargestellten Ausführungsform stehen die vertikalen Stützen 15 mit ihren unteren Endflächen 15b in der aufgerichteten Stellung auf den horizontalen Verlängerungen 13a, so dass diese die vertikalen Stützen 15 abstützen. Weitere Details des Schwenkmechanismus sind der Figur 2 zu entnehmen.

An dem oberen Ende 16b der vertikalen Stützen 15 ist der Rahmen 18 gelenkig via den Gelenken 17 aufgenommen. Der Rahmen 18 ist in der dargestellten Ausführungsform durch rechteckige Profile gebildet und umfasst parallel zueinander sich erstreckende Längsstangen 18a und mindestens eine Querstange 18b. Die Querstange 18b ist hierbei bevorzugt parallel zu der Achse der beiden Vorderräder 14b, 14b' angeordnet oder parallel versetzt dazu. An der Unterseite des Rahmens 18, bzw. an der Unterseite der Längsstangen 18a, sind hakenförmige Haltemittel 19 vorgesehen, die zur Vorderseite 4 orientiert eine Einhaköffnung 20 aufweisen. Über diese Einhaköffnungen 20 können als Schlaufen 31 ausgebildete Befestigungsmittel des Sacks 2 eingeführt werden, so dass dieser lösbar an dem Gestell 10 aufnehmbar ist. Zwischen den Längsstangen 18a ist eine Sacköffnung 32 zum Einwerfen von Sammelgut bereitgestellt ist.

Der Rahmen 18 ist in der Gebrauchsstellung mit Abstand zur Bodenplatte 12 und sich parallel zu dieser ersteckend orientiert. Die Gelenke 17 sind derart ausgebildet, dass der Rahmen 18 relativ zu den vertikalen Stützen 15, 15' um etwa 270° von der Transportstellung in die Gebrauchsstellung schwenkbar ist. In der Gebrauchsstellung liegt der verschwenkte Rahmen 18 auf oberen Endflächen 15a, 15a' der vertikalen Stützen 15, 15' auf und wird durch diese gestützt. In der Transportstellung liegt der Rahmen 18 auf einer der Seitenflächen 15c, 15c' der vertikalen Stützen 15, 15' auf.

An der Hinterseite 3 des Einhängesackwagens 1 ist ein Handgriff 5 vorgesehen, mittels dem der Benutzer den Einhängesackwagen 1 schieben oder ziehen kann. Hierfür ist der Handgriff 5 auf einer geeigneten Höhe über dem Untergrund angeordnet. Zum bequemeren Gehen mit dem Einhängesackwagen 1 ist der Handgriff 5 von dessen Hinterseite 3 vorstehend angeordnet, so dass für das Schreiten ausreichend Platz bleibt. D.h. der Handgriff 5 ist U-förmig ausgebildet und in geeigneter Höhe an den beiden vertikalen Stützen 15, 15' befestigt.

In der dargestellten Ausführungsform sind für weitere Geräte wie Besen, Rechen, Schaufel, Gabel etc., die nützliche Arbeit für das Aufsammeln von Gegenständen wie Grünzeug leisten, an dem Einhängesackwagen 1 Einrichtungen vorgesehen. Diese Einrichtungen können an mindestens einer Querstrebe 21 als Durchführungen 22 und/oder Aufnahmen 23 oder auch als Klemmmittel ausgebildet sein. In dem in Figur 1 gezeigten Beispiel können die Stiele der Geräte von oben durch die Durchführungen 22 einer ersten Querstrebe eingesteckt werden und sind im Bodenbereich in entsprechenden nach oben offenen Aufnahmen 23 einer zweiten Querstrebe aufnehmbar.

Die Figur 2 zeigt eine Detailansicht des Schwenkmechanismus der vertikalen Stütze 15 relativ zur Bodenplatte 12. Am unteren Ende 16a der vertikalen Stütze 15 ist an ihrer Seitenfläche 15c ein Scharnier 24 zur Verbindung mit der horizontalen Verlängerung 13a vorgesehen, um welches die vertikale Stütze 15 um eine Schwenkachse 25 schwenkbar ist. In der aufgerichteten Stellung der vertikalen Stütze 15 kommt die untere Endfläche 15b zur Anlage auf der horizontalen Verlängerung 13a. Ferner ist an der unteren Endfläche 15b eine seitliche Anlagefläche 26 vorgesehen, welche zur Anlage mit einer Seitenfläche der horizontalen Verlängerung 13a bringbar ist. Demnach ist die vertikale Stütze 15 auch gegen ein Verkippen quer zur Schwenkachse 25 gesichert.

Ferner ist aus der Detaildarstellung der Figur 2 eine Sicherung bzw. Verriegelung 27 ersichtlich, welche das unbeabsichtigte Zusammenklappen der vertikalen Stütze 15 in Richtung Bodenplatte 2 verhindert. Die lösbare Verriegelung 27 ist in dem Ausführungsbeispiel so ausgebildet, dass über ein an der unteren Endfläche 15b vorgesehene Verlängerung 28 bzw. Vorsprung ein auf der horizontalen Verlängerung 13a verschieblich aufgenommenes Verriegelungselement 29 geschoben und arretiert wird. Andere Arten einer Sicherung sind ebenfalls denkbar, beispielsweise Klemmmittel, etc.

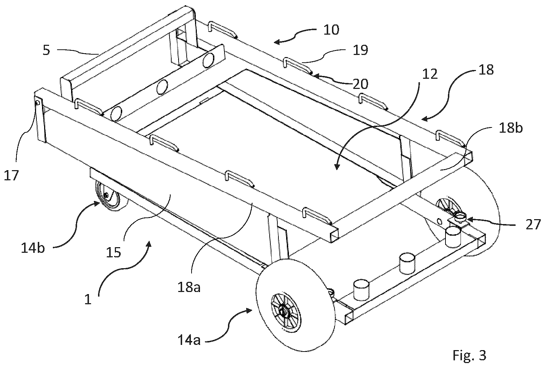

Die Figur 3 zeigt den Einhängesackwagen 1 in seiner Transportstellung, wobei der Sack 2 entfernt ist. Demnach sind die vertikalen Stützen 15, 15' gegen die Bodenplatte 12 geklappt und kommen in der Transportstellung zumindest teilweise zur Auflage auf dieser. Der Rahmen 18 ist um die vertikalen Stützen 15, 15' in eine Position verschwenkt, so dass die Längsstangen 18a, 18a' parallel zu den vertikalen Stützen 15, 15' verlaufen. Die dadurch reduzierte Höhe des Einhängesackwagens 1 erlaubt eine platzsparende Verwahrung.

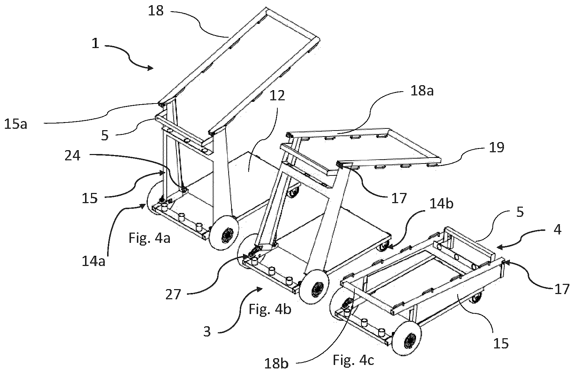

Die Figuren 4a, 4b und 4c zeigen unterschiedliche Phasen, um den Einhängesackwagen 1 ohne den Sack 2, ausgehend von der Gebrauchsstellung, dargestellt in Fig. 4a, in die Transportstellung, wie in Fig. 4c gezeigt, zusammen zu klappen. In der Gebrauchsstellung ist der Einhängesackwagen 1 zu seiner vollen Höhe auseinandergefaltet. Zunächst werden die vertikalen Stützen 15, 15' entriegelt und der Rahmen 18 um die Gelenke 17, 17' in Richtung Hinterseite 3 verschwenkt, wie in der Figur 4a gezeigt, so dass dieser nicht mehr vollständig an den oberen Endflächen 15a, 15a' der vertikalen Stützen 15, 15' aufliegt.

Die Figur 4b zeigt eine Zwischenphase des Zusammenklappens. Hierbei werden die entriegelten vertikalen Stützen 15, 15' mittels des Rahmens 18 um die Scharniere 24, 24' nach vorne geklappt, um die vertikalen Stützen 15, 15' gegen die Bodenplatte 12 zu legen.

Die Figur 4c zeigt einmal mehr die Transportstellung des Einhängesackwagens 1 in einer perspektivischen schematischen Darstellung. Der Rahmen 18 wird hierfür um die Gelenke 17, 17' weiter verschwenkt, um diesen gegen die Bodenplatte 12 und die vertikalen Stützen 15, 15' in die zusammengeklappte Stellung zu legen. In der Transportstellung kann der Einhängesackwagen 1 via der Hinterräder 14a, 14a' und dem mindestens einen Vorderrad 14b, 14b' verfahren werden, wobei der Benutzer hierfür sowohl den Handgriff 5 als auch die Querstange 18b greifen kann.

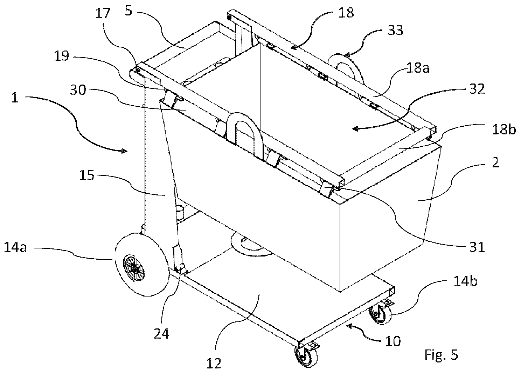

Die Figur 5 zeigt den Einhängesackwagen 1 mit dem daran befestigbaren Sack 2. Der Sack 2 umfasst einen oberen Rand 30, an welchem Befestigungsmittel 31 vorgesehen sind, vorzugsweise ausgebildet als Schlaufen 31. Die Schlaufen können in den hakenförmigen Haltemitteln 19 des Rahmens 18 eingefädelt werden und spannen entsprechend den Sack 2 auf. Insbesondere wird bei einem Sack 2 mit rechteckiger Grundfläche eine rechteckförmige Öffnung 32 aufgespannt, welche das Sammeln auch von sperrigem Sammelgut erleichtert, insbesondere von Ästen, etc. Ferner kann der Sack 2 über mindestens zwei Tragegriffe 33, 33' verfügen, mittels welchen der Sack 2 auch unabhängig von dem Einhängesackwagen 1 gut zu greifen und zu transportieren ist. In der dargestellten Ausführungsform ist ein Sack 2 mit einem kleineren Fassungsvermögen dargestellt, im Gegensatz zu einem Sack 2 mit einem grösseren Fassungsvermögen, welcher mit seiner Grundfläche dann auf der Bodenplatte 12 aufsteht.

### Bezugszeichenliste

- 1: Einhängesackwagen
- 2: Sack
- 3: Hinterseite des Einhängesackwagens
- 4: Vorderseite des Einhängesackwagens
- 5: Handgriff
- 10: Gestell
- 12: Bodenplatte
- 13: Stützgestell
- 13a, 13a': horizontale Verlängerungen
- 14: Räder
- 14a, 14a': Hinterräder
- 14b, 14b': Vorderräder
- 15, 15': vertikale Stützen
- 15a, 15a`: obere Endfläche der vertikalen Stützen 15, 15`
- 15b, 15b': untere Endfläche der vertikalen Stützen 15, 15'
- 15c, 15c': Seitenfläche der vertikalen Stützen 15, 15`
- 16a, 16a': unteres Ende der vertikalen Stützen 15, 15`
- 16b, 16b': oberes Ende der vertikalen Stützen 15, 15`
- 17, 17': Gelenke
- 18: Rahmen
- 18a, 18a': Längsstange
- 18b: Querstange
- 19: hakenförmiges Haltemittel
- 20: Einhaköffnung
- 21: Querstrebe
- 22: Durchführung
- 23: Aufnahme
- 24: Scharnier
- 25: Schwenkachse
- 26: seitliche Anlagefläche
- 27: Verriegelung
- 28: Verlängerung, Vorsprung
- 29: Verriegelungselement
- 30: oberer Rand des Sacks
- 31: Befestigungsmittel des Sacks, vorzugsweise Schlaufen
- 32: Sacköffnung
- 33, 33': Tragegriff des Sacks

## Patentansprüche

1. Ein Einhängesackwagen (1), umfassend
- ein Gestell (10), welches in eine Transportstellung und eine Gebrauchsstellung bringbar ist, umfassend
• eine Bodenplatte (12), an welcher zwei Hinterräder (14a, 14a') und mindestens ein Vorderrad (14b) angeordnet sind, die in Kontakt mit und fahrbar über einen Untergrund sind,
• mindestens zwei parallele vertikale Stützen (15, 15'), welche jeweils mit einem unteren Ende (16a, 16a`) via eines Scharniers (24, 24') an der und gegen die Bodenplatte (12) schwenkbar angeordnet und in vertikaler Stellung mittels einer Verriegelung (27, 27') arretierbar sind, und
• einen Rahmen (18), welcher mit oberen Enden (16b, 16b') der vertikalen Stützen (15, 15') via Gelenken (17, 17') gelenkig verbunden ist, wobei der Rahmen (18) relativ zu der vertikalen Stütze (15) in die Gebrauchsstellung schwenkbar ist, in welcher sich der Rahmen (18) parallel zur Bodenplatte (12) erstreckt;
- einen Sack (2) mit einem oberen Rand (30), an welchem über den Umfang verteilt Befestigungsmittel (31) vorgesehen sind, die an dem Gestell (10) lösbar befestigbar sind.

2. Der Einhängesackwagen (1) nach Anspruch 1, **dadurch gekennzeichnet, dass** die Hinterräder (14a, 14a') einen grösseren Durchmesser als das mindestens eine Vorderrad (14b) aufweisen, bevorzugt dass die Hinterräder (14a, 14a') einen zwei- bis dreimal grösseren Durchmesser als das mindestens eine Vorderrad (14b) aufweisen.

3. Der Einhängesackwagen (1) nach Anspruch 1 oder 2, **dadurch gekennzeichnet, dass** das mindestens eine Vorderrad (14b) lenkbar und feststellbar ist.

4. Der Einhängesackwagen (1) nach einem oder mehreren der vorhergehenden Ansprüche, **dadurch gekennzeichnet, dass** an dem Rahmen (18) Haltemittel (19) vorgesehen sind, an welchen die Befestigungsmittel (31) des Sacks (2) lösbar anordenbar sind.

5. Der Einhängesackwagen (1) nach Anspruch 4, **dadurch gekennzeichnet, dass** die Haltemittel (19) hakenförmig sind und dass die als Schlaufen ausgebildeten Befestigungsmittel (31) des Sacks (2) darin einhängbar sind.

6. Der Einhängesackwagen (1) nach einem oder mehreren der vorhergehenden Ansprüche, **dadurch gekennzeichnet, dass** der Sack (2) eine rechteckige Grundfläche aufweist.

7. Der Einhängesackwagen (1) nach einem oder mehreren der vorhergehenden Ansprüche, **dadurch gekennzeichnet, dass** der Sack (2) an mindestens zwei gegenüberliegenden Seiten am oberen Rand Tragegriffe (33, 33') aufweist.

8. Der Einhängesackwagen (1) nach einem oder mehreren der vorhergehenden Ansprüche, **dadurch gekennzeichnet, dass** der Sack (2) an mindestens zwei gegenüberliegenden Seiten am Boden Tragegriffe aufweist.

9. Der Einhängesackwagen (1) nach einem oder mehreren der vorhergehenden Ansprüche, **dadurch gekennzeichnet, dass** der Sack (2) aus Polypropylen-Gewebe gefertigt ist.

10. Der Einhängesackwagen (1) nach einem oder mehreren der vorhergehenden Ansprüche, **dadurch gekennzeichnet, dass** das Gestell (10) aus rostfreiem Material, vorzugsweise aus Chromstahl, gefertigt ist.

11. Der Einhängesackwagen (1) nach einem oder mehreren der vorhergehenden Ansprüche, **dadurch gekennzeichnet, dass** an diesem ein Handgriff (5) und/oder Befestigungen für Geräte wie beispielsweise Besen, Rechen, Schaufeln und/oder Gabeln vorgesehen sind.

12. Der Einhängesackwagen (1) nach Anspruch 11, **dadurch gekennzeichnet, dass** der Handgriff (5) als Horizontalstrebe zwischen den parallelen vertikalen Stützen (15, 15') verläuft, und/oder dass der Handgriff (5) vorstehend verläuft.

13. Der Einhängesackwagen (1) nach Anspruch 11, **dadurch gekennzeichnet, dass** die Befestigungen für Geräte an mindestens einer Querstrebe (21) des Gestells als Durchführungen (22) und/oder Aufnahmen (23) und/oder als Klemmmittel ausgebildet sind, bevorzugt dass die Befestigungen für Geräte an einer ersten Querstrebe (21) des Gestells als Durchführungen (22) und im Bodenbereich an einer zweiten Querstrebe (21') entsprechende nach oben offene Aufnahmen (23) sind.

14. Der Einhängesackwagen (1) nach einem oder mehreren der vorhergehenden Ansprüche, **dadurch gekennzeichnet, dass** die vertikalen Stützen (15, 15') eine trapezförmige Form aufweisen mit einer breiteren Grundfläche, bzw. unterem Ende (16a, 16a'), und einer schmaleren Grundfläche an dem oberen Ende (16b, 16b').

15. Der Einhängesackwagen (1) nach einem oder mehreren der vorhergehenden Ansprüche, **dadurch gekennzeichnet, dass** der Rahmen (18) zueinander parallel erstreckende Längsstangen (18a, 18a') und mindestens eine die Längsstangen verbindende Querstange (18b) umfasst.
